# EUROPEAN PATENT SPECIFICATION

(11) **EP 1 692 414 B1**
(45) Date of publication and mention of the grant of the patent: **10.08.2011**
(21) Application number: 04808745.6
(22) Date of filing: 30.11.2004
(51) Int. Cl.: F16G 5/16, B21D 53/14, B21D 28/06

(54) **FINE-BLANKING DEVICE**
FEINSTANZVORRICHTUNG
DISPOSITIF DE DECOUPAGE FIN

(30) Priority: 05.12.2003 NL 1024957
(43) Date of publication of application: 23.08.2006
(73) Proprietor: ROBERT BOSCH GMBH, 70442 Stuttgart (DE)
(72) Inventor: PRINSEN, Lucas, Hendricus, Robertus, Maria, 5062 LV Oisterwijk (NL)
(74) Representative: Plevier, Gabriel Anton Johan Maria
(86) International application number: PCT/NL2004/000829
(87) International publication number: WO 2005/054709

(56) References cited:
- EP-A- 0 278 545
- EP-A- 1 128 088
- EP-A- 1 132 648
- NL-C- 1 019 639
- PATENT ABSTRACTS OF JAPAN vol. 2003, no. 04, 2 April 2003 (2003-04-02) -& JP 2002 361348 A (TOPY IND LTD), 17 December 2002 (2002-12-17)

## Description

The present invention relates to a fine-blanking device for the fine blanking of transverse elements for a type of drive belt known as a push belt for a continuously variable transmission. Furthermore, the push belt, which is known per se, is provided with at least one endless pulling element, which generally comprises a set of nested flat metal rings, the transverse elements being incorporated in the push belt in such a manner that they can move along the periphery of the pulling element.

A push belt of this type is generally known, for example from European Patent publication EP-A-0278545 in the name of the present Applicant which, however, describes a conventional blanking process and device in which the products are blanked without a blank holder and with a relatively large amount of play between die and cutter and in which the product drops directly out of the die after it has been cut out by the cutter, and in which the strip of starting material is provided with centring holes through which, during blanking, centring pins of the blanking device are guided in order to correctly orient the strip and the cutter with respect to one another. However, this blanking method has proven insufficiently appropriate for the blanking of high-quality transverse elements with very accurate dimensions for the push belt. For this reason, at present what is known as the fine-blanking process is used to accurately cut the transverse elements out of strip material; this process is distinguished by the use of a relatively small play and the use of the blank holder which is placed against the product opposite the cutter during the fine-blanking process. A process of this type is likewise generally known and is described, for example, in the Dutch patent publication NL-A-1019639.

The known fine-blanking process makes use of a relatively narrow strip of starting material with a width of approximately one and a half times or at least less than double the height dimension of a transverse element, which starting material is therefore for the most part used to obtain transverse elements. This is realized with the aid of four strip-related blanking positions for the transverse elements, with the relatively wide radially innermost parts of a transverse element being located at a side of the strip in each blanking position and the relatively narrow, radially outermost parts, which taper to a point, i.e. the head parts of the respective transverse elements, located in the middle of the strip in each blanking position. The blanking positions are in this case located alternately on opposite sides of the strip, at a certain distance from one another in the longitudinal direction thereof, which distance approximately corresponds to half the width dimension of the transverse elements. Therefore, two successive blanking positions are located diagonally opposite one another, as seen in the longitudinal direction of the strip.

This arrangement has the significant advantage that maximum utilization of the starting material is achieved by making use of the peripheral shape of the transverse elements. Moreover, the known method achieves a relatively high capacity for the fine-blanking device, on account of the fact that four transverse elements are punched out simultaneously for each so-called blanking stroke at the location of the four blanking positions. After each blanking stroke, the strip is advanced through the fine-blanking device, in its longitudinal direction, through a distance of slightly more than double the width dimension of the transverse elements.

A comparable device but with just two blanking positions located diagonally opposite one another and with a relatively wide strip, or at least a strip which is a good deal wider than double, at least approximately triple, the height dimension of the transverse elements, is also known from the European patent publication EP-A-1128088. This publication also illustrates the problem, which is likewise known, that to maximize the quality of the blanked product, the position of the strip in the fine-blanking device, in particular with respect to the cutters thereof, has to be determined and fixed with a high level of accuracy. However, in practice this position is interfered with on account of the fact that a resulting transverse force occurs in the device during the fine-blanking as a result of the - asymmetrical - peripheral shape of the respective transverse element, and this force acts parallel to the strip in the direction from the abovementioned, relatively wide radially innermost parts of the transverse element towards the head part thereof. The use of the in relative terms very wide strip in EP-A-1128088 means that a large area of this strip can be clamped between the die surrounding the blank holder and a guide plate surrounding the cutter. Consequently, the abovementioned transverse force will not or will scarcely be able to lead to undesirable displacement of the cutter, for example, and the strip with respect to one another, with the result that in particular a deterioration in the dimensional accuracy of the blanked product is avoided. However, this set-up makes much less use of the starting material.

It is an object of the present invention to improve the known fine-blanking device or at least to avoid the adverse consequences of the abovementioned transverse force, while preferably at least maintaining the quality and capacity of the known device. According to the invention, this is achieved in a surprisingly simple way if the measures according to Claim 1 are used.

The fine-blanking device according to the invention uses a strip of starting material with a width of approximately or at least only slightly greater than double the height dimension of the transverse elements that are to be formed. Furthermore, the device comprises at least two blanking positions which are located in pairs in mirror-image form with respect to one another in the transverse direction of the strip, i.e. the point of the respective head parts of the two transverse elements that are to be formed at the location of these blanking positions face one another, with the points located at a short distance from one another in the vicinity of the centre of the strip. As a result of this measure, the two transverse forces associated with the separate blanking positions compensate for one another, so that it was possible to reduce the width of the strip compared to the fine-blanking device known from EP-A-1128088 while at the same time retaining the quality of cut and the dimensional accuracy of the blanked product. The alternative, somewhat laborious means offered by EP-A-0278545 for fixing the strip of starting material during the blanking stroke, namely the abovementioned centring holes and pins, have also proven surplus to requirements in the set-up according to the invention and can therefore be omitted.

Although the utilization of the starting material in the device according to the invention will not be able to match the abovementioned maximum utilization, this is compensated for by a considerable increase in the quality of the blanked product.

In the text which follows, the invention will be explained in more detail by way of example with reference to a drawing, in which:
Fig. 1 diagrammatically depicts, in the form of a cross section, a fine-blanking process and the tool parts involved;
Fig. 2 shows the known method on the basis of a plan view of a strip of material which is to be blanked;
Fig. 3 shows the method according to the invention in a similar view to Figure 2.

Throughout the figures, corresponding structural elements are denoted by identical reference numerals.

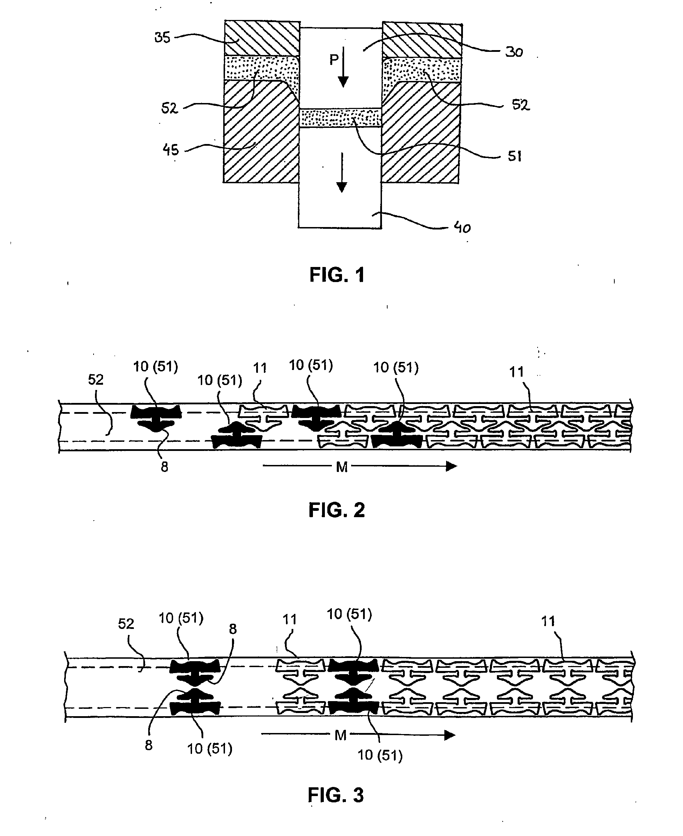

To illustrate the formation of a transverse element 51 (cf. also Figures 2 and 3), Figure 1 diagrammatically depicts a so-called fine-blanking process and device used to cut a blanked product 51 that is to be formed, in this case the transverse element 51 for a push belt for a continuously variable transmission, out of starting material 52 in strip form. The known fine-blanking device comprises a die 45 and a guide plate 35, between which the strip of starting material 52 is clamped. The device also comprises a cutter 30 and, in line with the latter, a support member, known as the blank holder 40. The periphery of both the cutter 30 and the blank holder 40 substantially corresponds to the periphery of the transverse elements 51 that are to be blanked. A movement of the cutter 30 with respect to the die 45 as indicated by arrow P causes the stamped product 51 to be cut out, with the blank holder 40 exerting a counter-force but at the same time also following the movement of the cutter 30. A free space or play is defined perpendicular to the outer periphery of the cutter 30 and the inner periphery of the die 45. The degree of play is generally relatively small, and in the case of the fine-blanking process is approximately 1 to 5 percent of a thickness dimension of the starting material 52.

Figure 2 illustrates the known set-up of the fine-blanking device for transverse elements 51 on the basis of the strip of starting material 52. The dark areas 10 use the contours of the transverse element 51 that is to be formed to indicate four blanking positions 10 where the blanked products 51 are formed simultaneously in one so-called blanking stroke. The outlined contours 11 indicate positions where transverse elements 51 have already been blanked out of the strip 52. The strip 52 is guided through the fine-blanking device in its longitudinal direction as indicated by arrow M. After each blanking stroke, the strip 52 is conveyed two blanking positions 10 through the device, in the direction indicated by arrow M, which virtually corresponds to double the width dimension of the transverse elements 51.

It can also be seen from this Figure 2 that in the known device the front blanking position 10, i.e. the blanking position located furthest to the right in the figure, is surrounded by four contours 11 which have already been cut out, and the blanking position 10 immediately behind the front blanking position is surrounded by three contours 11 which have been cut out, the following blanking position 10 is surrounded by one contour which has already been cut out, and the rear blanking position 10, located furthest to the left, does not adjoin a contour 11 which has already been cut out but rather is completely surrounded by the starting material 52. It has been found that one drawback of a set-up and device of this nature in the fine-blanking process is that the blanked products 51 produced by the four different blanking positions 10 may differ from one another at least slightly in particular with regard to their dimensional accuracy, which is probably caused by the above-described difference in the material surrounding the respective blanking positions 10. In particular if the blanked products 51 are then assembled with one another to form an end product, as is the case for the transverse elements 51 in the push belt, relatively minor deviations in the dimensional accuracy of this nature may nevertheless give rise to considerable deviations in the end product. Also, the cutters 30 and/or the dies 45 for each of the four blanking positions 10 may war in different ways, and consequently they need to be replaced at different times or are replaced simultaneously at the time when the tool part 30, 45 which wears most quickly wears out.

Finally, Figure 3 illustrates the set-up of the fine-blanking device according to the present invention. In this case, two blanking positions 10 are arranged opposite one another in pairs in the transverse direction of the strip 52, with arrowhead-shaped head parts 8 of the two transverse elements 51 that are to be formed at the location of these blanking positions 10 facing towards one another. As a result of this measure, the two transverse forces associated with the separate blanking positions 10 compensate for one another, or at least the dimensional accuracy of the blanked product 51 is improved. Moreover, the cutters 30 of the two blanking positions 10 may as a result be placed relatively close together, so that in the fine-blanking device according to the invention it is advantageously possible to use a strip of starting material 52 with a width of approximately or at least only slightly greater than double the height dimension of the transverse elements 51 that are to be formed.

A further, additional advantage of the fine-blanking device according to the invention is that the above-described difference in the material surrounding the respective blanking positions 10 does not occur, but rather the material surrounding the blanking positions is correspondingly and substantially symmetrical for both blanking positions 10. This fact also has a positive influence on the dimensional accuracy of the respective blanked products 51.

As shown in Figure 3, it is advantageously possible for two or even more pairs of the abovementioned blanking positions 10 located opposite one another to be arranged in the fine-blanking device according to the invention, in which case there is in each case a free space, which approximately corresponds to the number of pairs times the dimension of the transverse elements 51 to be formed or the blanking positions (10), provided between each of the pairs.

## Claims

1. Fine-blanking device for the fine blanking of transverse elements (51) for a push belt for a continuously variable transmission, in which blanking positions (10) for the transverse elements (51) are provided in the longitudinal direction (M) of a strip (12) of the starting material that needs to be passed through the fine-blanking device, which transverse elements (51) are provided with a head part (8) that tapers to a point in a height direction of the transverse element (51), **characterized in that** cutters (30) of the blanking positions (10) that are provided located opposite one another in a mirror-image form in the transverse direction of the strip (12), such that the respective head parts (8) of the transverse elements (51) that are to be formed simultaneously, are located directly next to one another.

2. Fine-blanking device according to Claim 1, **characterized in that** the fine-blanking device is adapted for a strip (12) with a width of approximately or at least only slightly greater than double the height dimension of the transverse element (51).

3. Fine-blanking device according to Claim 1 or 2, such that, as seen in the longitudinal direction (M) of the strip (12), two or more pairs of blanking positions (10) located opposite one another in mirror-image form are provided with a free space between them approximately corresponding to the number of the said pairs times the dimension of two transverse elements (51) or blanking positions (10).

## Patentansprüche

1. Feinstanzvorrichtung für das Feinstanzen von Querelementen (51) für einen Schubriemen für ein stufenloses Getriebe, wobei die Stanzpositionen (10) für die Querelemente (51) in Längsrichtung (M) eines Streifens (12) aus dem Startmaterial, das durch die Feinstanzvorrichtung hindurch geführt werden muss, vorgesehen sind, wobei die Querelemente (51) mit einem Kopfteil (8) versehen sind, das sich in Höhenrichtung des Querelements (51) zu einer Spitze verjüngt, **dadurch gekennzeichnet, dass** Schneiden (30) für die Stanzpositionen (10) spiegelbildlich in Querrichtung des Streifens (12) einander gegenüber so positioniert sind, dass jeweilige gleichzeitig herzustellende Kopfteile (8) der Querelemente (51) direkt nebeneinander positioniert sind.

2. Feinstanzvorrichtung nach Anspruch 1, **dadurch gekennzeichnet, dass** die Feinstanzvorrichtung für einen Streifen (12) mit einer Breite ausgeführt ist, die ungefähr der doppelten Höhenabmessung des Querelements (51) entspricht oder nur etwas größer als diese ist.

3. Feinstanzvorrichtung nach Anspruch 1 oder 2, derart, dass, wie in Längsrichtung (M) des Streifens (12) zu sehen, zwei oder mehr Paare von Stanzpositionen (10), die spiegelbildlich einander gegenüber positioniert sind, mit einem Freiraum dazwischen versehen sind, der ungefähr der Anzahl der Paare multipliziert mit der Abmessung von zwei Querelementen (51) oder Stanzpositionen (10) entspricht.

## Revendications

1. Dispositif de découpage fin pour le découpage fin d'éléments transversaux (51) pour une courroie de poussée pour une transmission à variation continue, dans lequel des positions de découpage (10) pour les éléments transversaux (51) sont prévues dans la direction longitudinale (M) d'une bande (12) du matériau de départ qui doit passer à travers le dispositif de découpage fin, lesquels éléments transversaux (51) sont pourvus d'une partie de tête (8) qui s'effile en pointe dans une direction en hauteur de l'élément transversal (51), **caractérisé en ce que** des couteaux (30) des positions de découpage (10) sont prévus en face les uns des autres suivant un agencement spéculaire dans la direction transversale de la bande (12) de telle sorte que les parties de tête respectives (8) des éléments transversaux (51) qui doivent être formés simultanément soient situées directement les unes à côté des autres.

2. Dispositif de découpage fin selon la revendication 1, **caractérisé en ce que** le dispositif de découpage fin est adapté pour une bande (12) ayant une largeur qui est approximativement ou au moins seulement légèrement plus grande que le double de la dimension en hauteur de l'élément transversal (51).

3. Dispositif de découpage fin selon la revendication 1 ou 2, tel que, vu dans la direction longitudinale (M) de la bande (12), deux paires ou plus de positions de découpage (10), situées en face les unes des autres dans un agencement spéculaire, soient pourvues d'un espace libre entre elles correspondant approximativement au nombre desdites paires multiplié par la dimension de deux éléments transversaux (51) ou positions de découpage (10).
